# EUROPÄISCHE PATENTSCHRIFT

(11) **EP 2 085 668 B1**
(45) Veröffentlichungstag und Bekanntmachung des Hinweises auf die Patenterteilung: **01.09.2010**
(21) Anmeldenummer: 08021862.1
(22) Anmeldetag: 17.12.2008
(51) Int. Cl.: F16K 1/12, F16K 1/36

(54) **Gasregelventil**
Gas regulating valve
Vanne de régulation de gaz

(30) Priorität: 24.01.2008 DE 102008005977
(43) Veröffentlichungstag der Anmeldung: 05.08.2009
(73) Patentinhaber: Honeywell Technologies Sarl, 1180 Rolle (CH)
(72) Erfinder: Van Prooijen, Frank, 7827 TK Emmen (NL)
(74) Vertreter: Sturm, Christoph

(56) Entgegenhaltungen:
- EP-A- 1 004 802
- WO-A-02/36999
- GB-A- 994 935
- US-A- 2 659 388
- US-A- 5 135 198
- US-A- 5 156 181

## Beschreibung

Die Erfindung betrifft ein Gasregelventil nach dem Oberbegriff des Anspruchs 1.

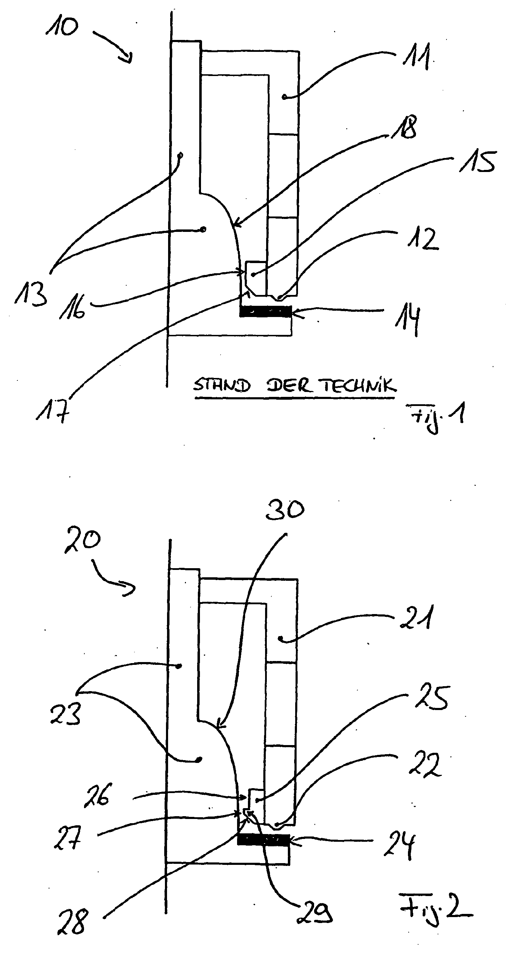

Fig. 1 zeigt einen schematisierten Ausschnitt aus einem aus dem Stand der Technik bekannten Gasregelventil 10, wobei das Gasregelventil 10 der Fig. 1 einen Ventilkörper 11 umfasst, der einen Ventilsitz 12 bereitstellt. Mit dem den Ventilsitz 12 bereitstellenden Ventilkörper 11 wirkt ein Ventilstößel 13 zusammen, der gegenüber dem Ventilkörper 11 in axialer Richtung verlagerbar ist, wobei in geschlossenem Zustand des Gasregelventils 10 ein Vorsprung 14 des Ventilstößels 13 auf dem Ventilsitz 12 des Ventilkörpers 11 zur Anlage kommt. In geöffnetem Zustand des Gasregelventils 10 ist der Vorsprung 14 des Ventilstößels 13 vom Ventilsitz 12 des Ventilkörpers 11 abgehoben.

Gemäß dem Stand der Technik der Fig. 1 ist dem Ventilkörper 11 benachbart zum Ventilsitz 12 ein Element 15 zugeordnet, welches den Ventilstößel 13 in Axialrichtung gesehen abschnittsweise umschließt. Dabei definiert eine radial innere Fläche des Elements 15 mit einer benachbarten Fläche des Ventilstößels 13 einen Spalt, wobei diese Fläche 18 des Ventilstößels 13 paraboloidartig konturiert ist, und wobei die Fläche des Elements 13 einen zylinderartig konturierten Abschnitt 16 und einen kegelstumpfartig konturierten Abschnitt 17 aufweist. Durch axiales Verlagern des Ventilstößels 13 gegenüber dem Ventilkörper 11 und damit gegenüber dem Element 15 kann die Abmessung des zwischen dem Ventilstößel 13 und dem Element 15 ausgebildeten Spalts in radialer Richtung verändert werden, um so den Durchfluss durch das Gasregelventil 10 zu bestimmen.

Das in Fig. 1 dargestellte, aus dem Stand der Technik bekannte Gasregelventil 10 verfügt üblicherweise über einen Stellmotor, um den Ventilstößel 13 gegenüber dem Ventilsitz 12 und damit dem Element 15 zu verlagern. Abhängig von der Verlagerung des Ventilstößels 13 gegenüber dem Element 15 verändert sich die radiale Abmessung des Spalts zwischen dem Element 15 und dem Ventilstößel 13 und damit der Durchfluss durch das Gasregelventil 10, wobei bei dem aus dem Stand der Technik gemäß Fig. 1 bekannten Gasregelventil 10 ab einer definierten Öffnungsstellung des Gasregelventils 10 ein Effekt festgestellt werden kann, dass sich trotz weiterem Öffnen des Gasregelventils 10 der Durchfluss durch dasselbe verringert. Dies liegt insbesondere daran, dass sich die Strömung durch den Spalt ab einer gewissen Öffnungsstellung des Gasregelventils von einer laminaren Strömung in eine turbulente Strömung ändert. Eine derartige Verringerung des Durchflusses durch das Gasregelventil 10 trotz einer stärkeren Öffnung desselben ist aus steuerungstechnischen bzw. regelungstechnischen Gründen von Nachteil.

Aus der US 5,156,181 A ist ein Gasregelventil bekannt, welches einen ringförmigen Ventilkörper mit einem Eingang und einem Ausgang aufweist. Das Gasregelventil nach diesem Stand der Technik verfügt über ein doppeltes Tellerventil, das konzentrisch zum Ventilkörper ist und das die Strömung durch Verlagerung eines Ventilstößels beeinflusst. Der Ventilstößel hat eine Außenfläche, die paraboloidförmig ist und die gegen einen zylinderförmigen Dichtungssitz bewegbar ist. Der Raum zwischen der Außenfläche des Ventilstößels definiert einen variablen, ringförmigen Spalt. Der Ringsitz zeigt eine äußere, kegelförmige Fläche.

Weiterer Stand der Technik ist aus der WO 02/36999 A2 sowie aus der EP 1 004 802 A1 bekannt.

Hiervon ausgehend liegt der Erfindung das Problem zu Grunde, ein neuartiges Gasregelventil zu schaffen. Dieses Problem wird durch ein Gasregelventil mit den Merkmalen des Anspruchs 1 gelöst. Die radial innere Fläche des Elements ist derart konturiert, dass dieselbe einen ersten Abschnitt mit einem ersten Innendurchmesser und einen zweiten Abschnitt mit einem zweiten Innendurchmesser aufweist, wobei der zweite Abschnitt mit dem zweiten Innendurchmesser, der größer als der erste Innendurchmesser ist, einen größeren axialen Abstand vom Ventilsitz aufweist als der erste Abschnitt mit dem ersten Innendurchmesser.

Mit dem erfindungsgemäßen Gasregelventil kann vermieden werden, dass sich trotz einer zunehmenden Öffnung desselben der Durchfluss durch das Gasregelventil verringert. Über den gesamten Öffnungsbereich des Gasregelventils werden gleichmäßige Strömungsverhältnisse durch den vom Ventilstößel und den Ventilstößel radial außen umschließenden Element definierten Spalt gewährleistet, nämlich turbulente Strömungsverhältnisse.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1:: eine schematisierte, ausschnittsweise Garstellung eines aus dem Stand der Technik bekannten Gasregelventils; und
- Fig. 2:: eine schematisierte, ausschnittsweise Darstellung eines erfin- dungsgemäßen Gasregelventils.

Fig. 2 zeigt einen schematisierten Ausschnitt aus einem erfindungsgemäßen Gasregelventil 20, wobei das Gasregelventil 20 einen Ventilkörper 21 umfasst, der einen Ventilsitz 22 bereitstellt. Mit dem Ventilkörper 21 wirkt ein gegenüber dem Ventilkörper 21 in axialer Richtung verlagerbarer Ventilstößel 23 zusammen, wobei in geschlossenem Zustand des Gasregelventils 20 ein Vorsprung 24 des Ventilstößels 23 am Ventilsitz 22 des Ventilkörpers 21 zur Anlage kommt.

Dem Ventilkörper 21 ist benachbart zum Ventilsitz 22 ein Element 25 zugeordnet, welches in axialer Richtung gesehen den Ventilstößel 23 abschnittsweise radial außen umgibt. Zwischen einer Fläche des Ventilstößels 23 und einer radial inneren Fläche des Elements 25 wird ein Spalt ausgebildet, der von der axialen Relativposition des Ventilstößels 23 zum Ventilkörper 21 und damit zum Element 25 abhängig ist.

Beim erfindungsgemäßen Gasregelventil 20 der Fig. 2 ist die radial innere Fläche des Elements 25 derart konturiert, dass dieselbe einen ersten, zylinderartig konturierten Abschnitt 27 mit einem ersten Innendurchmesser und einen zweiten, ebenfalls zylinderartig konturierten Abschnitt 26 mit einem zweiten Innendurchmesser aufweist.

Der zweite Abschnitt 26 mit dem zweiten Innendurchmesser, der größer als der erste Innendurchmesser des ersten Abschnitts 27 ist, weist einen größeren axialen Abstand vom Ventilsitz 22 auf als der erste Abschnitt 27 mit dem ersten Innendurchmesser. Zwischen dem ersten Abschnitt 27 und dem zweiten Abschnitt 26 ist gemäß Fig. 2 ein Absatz 29 ausgebildet.

An den ersten Abschnitt 27 mit dem ersten Innendurchmesser, der kleiner ist als der zweite Innendurchmesser des zweiten Abschnitts 26, schließt sich benachbart zum Ventilsitz 22 ein kegelstumpfförmig konturierter Abschnitt 28 der inneren Fläche des Abschnitts 25 an.

Die Fläche 30 des Ventilstößels 23, die mit dem Element 25 den Spalt definiert, ist gemäß Fig. 2 wiederum paraboloidartig konturiert.

Das erfindungsgemäße Gasregelventil 20 der Fig. 2 unterscheidet sich vom aus dem Stand der Technik bekannten Gasregelventil 10 der Fig. 1 demnach durch die Ausgestaltung des dem Ventilkörper 21 benachbart zum Ventilsitz 22 zugeordneten Elements 25, welches den Ventilsitz 23 in Axialrichtung gesehen radial außen abschnittsweise umschließt und mit demselben einen Spalt definiert.

Die radial innere Fläche dieses Elements 25, die mit der Fläche 30 des Ventilstößels 23 den Spalt definiert, weist erfindungsgemäß durch Einbringen des Absatzes 29 zwei zylinderartig konturierte Abschnitte 26, 27 auf, wobei der Abschnitt 27, der durch einen kleineren Innendurchmesser gekennzeichnet ist und demnach die Abmessung des Spalts zwischen dem Ventilstößel 23 und dem Element 25 maßgeblich definiert, näher zum Ventilsitz 22 positioniert ist als der Abschnitt 26 mit dem größeren Innendurchmesser. Bei unveränderter axialer Abmessung des Elements 25 wird hierdurch die durch den Abschnitt 27 definierte, effektive axiale Erstreckung des zwischen dem Element 25 und dem Ventilsitz 23 definierten Spalts verkürzt.

Die axiale Ersteckung des zweiten Abschnitts 26 mit dem zweiten Innendurchmesser, der größer als der erste Innendurchmesser ist, ist größer als die axiale Erstreckung des ersten Abschnitts 27 mit dem ersten Innendurchmesser.

Das Gasregelventil 20 verfügt vorzugsweise über einen Schrittmotor, um den Ventilstößel 23 gegenüber dem Ventilkörper 21 und damit dem Ventilsitz 22 sowie dem Element 25 zu verlagern. Für sämtliche Relativpositionen zwischen dem Ventilstößel 23 und dem Ventilkörper 21 wird dabei bedingt durch die erfindungsgemäße Ausführung des Elements 25 durch den zwischen dem Element 25 und dem Ventilstößel 23 ausgebildeten Spalts eine turbulente Strömung gewährleistet, so dass stets gewährleistet ist, dass sich mit weiterer Öffnung des Gasregelventils 20 der Durchfluss durch dasselbe erhöht.

### Bezugszeichenliste

- 10: Gasregelventil
- 11: Ventilkörper
- 12: Ventilsitz
- 13: Ventilstößel
- 14: Vorsprung
- 15: Element
- 16: Abschnitt
- 17: Abschnitt
- 18: Fläche

- 20: Gasregelventil
- 21: Ventilkörper
- 22: Ventilsitz
- 23: Ventilstößel
- 24: Vorsprung
- 25: Element
- 26: Abschnitt
- 27: Abschnitt
- 28: Abschnitt
- 29: Absatz
- 30: Fläche

## Patentansprüche

1. Gasregelventil, mit einem Ventilstößel und einem einen Ventilsitz aufweisenden Ventilkörper, wobei dem Ventilkörper ein den Ventilstößel ringförmig umschließendes Element derart zugeordnet ist, dass eine Fläche des Ventilstößels mit einer radial inneren Fläche des Elements einen Spalt definiert, der durch axiale Verlagerung des Ventilstößels gegenüber dem Ventilkörper und damit dem Element veränderbar ist, **dadurch gekennzeichnet, dass** die radial innere Fläche des Elements (25) derart konturiert ist, dass dieselbe einen ersten Abschnitt (27) mit einem ersten Innendurchmesser und einen zweiten Abschnitt (26) mit einem zweiten Innendurchmesser aufweist, wobei der zweite Abschnitt (26) mit dem zweiten Innendurchmesser, der größer als der erste Innendurchmesser ist, einen größeren axialen Abstand vom Ventilsitz (22) aufweist als der erste Abschnitt (27) mit dem ersten Innendurchmesser.

2. Gasregelventil nach Anspruch 1, **dadurch gekennzeichnet, dass** zwischen dem ersten Abschnitt (27) und dem zweiten Abschnitt (26) ein Absatz (29) ausgebildet ist.

3. Gasregelventil nach Anspruch 1 oder 2, **dadurch gekennzeichnet, dass** der erste Abschnitt (27) und der zweite Abschnitt (26) der inneren Fläche des Elements (25) jeweils zylinderartig konturiert sind.

4. Gasregelventil nach einem der Ansprüche 1 bis 3, **dadurch gekennzeichnet, dass** sich an den zweiten Abschnitt (26) mit dem zweiten Innendurchmesser benachbart zum Ventilsitz (22) ein Abschnitt (28) der inneren Fläche abschließt, der kegelstumpfförmig konturiert ist.

5. Gasregelventil nach einem der Ansprüche 1 bis 4, **dadurch gekennzeichnet, dass** die Fläche (30) des Ventilstößels (23), die mit der inneren Fläche des Elements (25) einen Spalt definiert, paraboloidartig konturiert ist.

6. Gasregelventil nach einem der Ansprüche 1 bis 5, **dadurch gekennzeichnet, dass** der Ventilstößel (23) über einen Schrittmotor axial verlagerbar ist.

## Claims

1. Gas-regulating valve, with a valve tappet and with a valve body having a valve seat, an element which surrounds the valve tappet annularly being assigned to the valve body in such a way that a face of the valve tappet defines, with a radially inner face of the element, a gap which can be varied as a result of the axial displacement of the valve tappet with respect to the valve body and therefore to the element, **characterized in that** the radially inner face of the element (25) is contoured in such a way that the said radially inner face has a first portion (27) with a first inside diameter and a second portion (26) with a second inside diameter, the second portion (26) with the second inside diameter, which is larger than the first inside diameter, being at a greater axial distance from the valve seat (22) than the first portion (27) with the first inside diameter.

2. Gas-regulating valve according to Claim 1, **characterized in that** a step (29) is formed between the first portion (27) and the second portion (26).

3. Gas-regulating valve according to Claim 1 or 2, **characterized in that** the first portion (27) and the second portion (26) of the inner face of the element (25) are in each case of cylinder-like contour.

4. Gas-regulating valve according to one of Claims 1 to 3, **characterized in that** a portion (28) of frustoconical contour of the inner face adjoins, adjacently to the valve seat (22), the second portion (26) with the second inside diameter.

5. Gas-regulating valve according to one of Claims 1 to 4, **characterized in that that** face (30) of the valve tappet (23) which with the inner face of the element (25) defines a gap is of paraboloid-like contour.

6. Gas-regulating valve according to one of Claims 1 to 5, **characterized in that** the valve tappet (23) can be displaced axially via a stepping motor.

## Revendications

1. Soupape de régulation de gaz comprenant un poussoir de soupape et un corps de soupape présentant un siège de soupape, le corps de soupape étant associé à un élément entourant de manière annulaire le poussoir de soupape de telle sorte qu'une surface du poussoir de soupape définisse, avec une surface radialement interne de l'élément, une fente qui peut varier par déplacement axial du poussoir de soupape par rapport au corps de soupape et donc par rapport à l'élément, **caractérisée en ce que** la surface radialement interne de l'élément (25) a un contour tel qu'elle présente une première portion (27) avec un premier diamètre intérieur et une deuxième portion (26) avec un deuxième diamètre intérieur, la deuxième portion (26) ayant le deuxième diamètre intérieur, qui est supérieur au premier diamètre intérieur, présentant un plus grand espacement axial du siège de soupape (22) que la première portion (27) ayant le premier diamètre intérieur.

2. Soupape de régulation de gaz selon la revendication 1, **caractérisée en ce qu'**un épaulement (29) est réalisé entre la première portion (27) et la deuxième portion (26).

3. Soupape de régulation de gaz selon la revendication 1 ou 2, **caractérisée en ce que** la première portion (27) et la deuxième portion (26) de la surface interne de l'élément (25) ont chacune un contour de forme cylindrique.

4. Soupape de régulation de gaz selon l'une quelconque des revendications 1 à 3, **caractérisée en ce qu'**une portion (28) de la surface interne, de contour de forme tronconique, se raccorde à la deuxième portion (26) ayant le deuxième diamètre intérieur, à côté du siège de soupape (22).

5. Soupape de régulation de gaz selon l'une quelconque des revendications 1 à 4, **caractérisée en ce que** la surface (30) du poussoir de soupape (23), qui définit une fente avec la surface interne de l'élément (25), a un contour de forme paraboloïde.

6. Soupape de régulation de gaz selon l'une quelconque des revendications 1 à 5, **caractérisée en ce que** le poussoir de soupape (23) peut être déplacé axialement par le biais d'un moteur pas à pas.
